# FASCICULE DE BREVET EUROPEEN

(11) **EP 3 820 772 B1**
(45) Date de publication et mention de la délivrance du brevet: **13.09.2023**
(21) Numéro de dépôt: 19753152.8
(22) Date de dépôt: 09.07.2019
(51) Int. Cl.: B63B 27/30, B63B 27/24, B67D 9/02

(54) **SYSTEME DE TRANSFERT DE GAZ LIQUEFIE**
FLÜSSIGGAS-TRANSFERSYSTEM
LIQUEFIED GAS TRANSFER SYSTEM

(30) Priorité: 12.07.2018 FR 1856451
(43) Date de publication de la demande: 19.05.2021
(73) Titulaire: Gaztransport et Technigaz, 78470 Saint-Rémy-lès-Chevreuse (FR)
(72) Inventeur: ENGLEBERT, Patrick, 78470 Saint Rémy les Chevreuse (FR); GELIN, Guillaume, 78470 Saint Rémy les Chevreuse (FR)
(74) Mandataire: Loyer & Abello
(86) Numéro de dépôt international: PCT/FR2019/051711
(87) Numéro de publication internationale: WO 2020/012114

(56) Documents cités:
- GB-A- 2 537 673
- US-A- 3 085 593
- US-A1- 2016 304 168

## Description

### Domaine technique

L'invention se rapporte au domaine du transfert de fluide et se rapporte plus particulièrement au transfert de gaz liquéfié entre deux installations distantes, telles qu'un navire fournisseur et un navire client par exemple.

### Arrière-plan technologique

Dans l'état de la technique, il existe une grande variété de systèmes permettant de transférer du gaz liquéfié, en mer, entre deux navires.

Le document WO2016170304 divulgue un système de transfert de gaz naturel liquéfié comportant un bras articulé en trois parties montées articulées les unes par rapport aux autres. Le bras articulé comporte une partie proximale qui est montée pivotante autour d'un axe vertical sur le pont d'un navire fournisseur, une partie médiane qui est montée articulée sur la partie proximale autour d'un premier axe horizontal et une partie distale qui est montée articulée sur la partie médiane autour d'un deuxième axe horizontal. Le bras articulé comporte deux actionneurs linéaires, l'un étant monté articulé, d'une part, sur la partie proximale et, d'autre part, sur la partie médiane et l'autre étant monté articulé, d'une part, sur la partie médiane et, d'autre part, sur la partie distale.

Le système de transfert comporte également deux lignes de transfert, dont l'une vise à transférer du gaz liquéfié du navire fournisseur vers le navire client et l'autre vise à extraire du gaz naturel du navire client vers le navire fournisseur afin d'équilibrer les pressions dans les ciels gazeux des cuves des deux navires. Chaque ligne de transfert comporte une première portion rigide qui s'étend le long de la portion proximale du bras et une deuxième portion flexible qui est suspendue au moyen d'un dispositif de levage à l'extrémité de la partie distale du bras articulé et qui est destinée à être raccordée à un manifold du navire client. Les deuxièmes portions flexibles sont chacune équipées d'un dispositif de raccordement à déconnexion d'urgence. Chaque dispositif de raccordement à déconnexion d'urgence comporte deux parties qui sont aptes à se déconnecter l'une de l'autre afin d'interrompre le transfert de gaz liquéfié entre le navire fournisseur et le navire client.

Un tel système de transfert ne donne pas entièrement satisfaction. En particulier, un tel système de transfert ne prévoit pas de vanne portée par le bras articulé et disposée en amont des dispositifs de raccordement à déconnexion d'urgence de manière à isoler la deuxième portion flexible du reste de la ligne de transfert lorsque la deuxième portion flexible est déconnectée du manifold du navire client. Or, avec un tel système de transfert, si une vanne est disposée en amont des dispositifs de raccordement afin d'assurer un niveau de sécurité satisfaisant, elle est nécessairement disposée sur le pont du navire fournisseur, c'est-à-dire à une distance importante, le long de la ligne de transfert, de l'extrémité de la seconde portion flexible. Dès lors, en cas de déconnexion, une quantité importante de gaz liquéfié se trouve piégée dans une zone tampon s'étendant entre la vanne et l'extrémité de la deuxième portion flexible. Or, une telle zone tampon doit être intégralement drainée et inertée afin d'assurer une absence totale de gaz après chaque opération de transfert, ce qui occasionne un temps de déconnection après transfert important.

### Résumé

Une idée à la base de l'invention est de proposer un système de transfert de fluide qui soit simple et fiable, permette de s'adapter à une grande variété de configurations et permette de limiter la longueur de la portion tampon de la ligne de transfert devant être drainée après les opérations de transfert.

Selon un mode de réalisation, l'invention fournit un système de transfert du gaz liquéfié entre une première et une deuxième installations, ledit système de transfert comportant :
- un bras articulé comportant une première partie proximale destinée à être montée mobile en rotation sur la première installation autour d'un premier axe vertical, une deuxième partie médiane qui est montée pivotante sur la première partie proximale autour d'un deuxième axe et une troisième partie distale qui est montée pivotante sur la deuxième partie médiane autour d'un troisième axe; et
- au moins une ligne de transfert, destinée à transférer du gaz liquéfié entre la première et la deuxième installation, et comportant une première portion proximale flexible destinée à être raccordée à une cuve de stockage de gaz liquéfié de la première installation ; une deuxième portion médiane rigide qui est fixée à la deuxième partie médiane du bras articulé et une troisième portion distale qui est suspendue à la troisième partie distale du bras articulé et qui présente une extrémité destinée à être raccordée à un manifold de la deuxième installation, la deuxième portion médiane étant équipée d'une vanne.

Ainsi, grâce à sa structure précitée en trois parties, un tel bras articulé permet de s'adapter à une grande variété de configurations différentes.

En outre, la première portion proximale et la troisième portion distale de la ligne de transfert étant flexibles, elles autorisent les mouvements relatifs des trois parties du bras articulé et cela sans pour autant avoir recours à des joints tournants qui sont chers, complexes et susceptibles de générer des défauts d'étanchéité.

De plus, la ligne de transfert comportant une vanne supportée par le bras articulé, la quantité de gaz liquéfié piégée entre l'extrémité de la troisième portion distale et la vanne est limitée. En outre, la quantité de gaz liquéfié susceptible d'être piégée entre la vanne et l'extrémité de la troisième portion distale est d'autant plus limitée que la vanne est montée sur la deuxième portion médiane de la ligne de transfert qui est fixée sur la deuxième partie médiane du bras articulé.

Enfin, dans un tel agencement, la vanne n'étant pas portée par la troisième portion distale flexible, elle n'augmente pas la difficulté à manoeuvrer ladite troisième portion distale, de sorte que les opérations de raccordement de la ligne de transfert au manifold de la deuxième installation ne sont pas négativement affectées par le support de la vanne par le bras articulé.

Selon d'autres modes de réalisation avantageux, un tel système de transfert peut présenter une ou plusieurs des caractéristiques suivantes.

Selon un mode de réalisation, le deuxième axe est horizontal.

Selon un mode de réalisation, le troisième axe est horizontal.

Selon un mode de réalisation, la deuxième portion médiane comporte une première et une deuxième extrémité respectivement raccordée à la première portion proximale et à la troisième portion distale et la vanne est disposée plus proche de la deuxième extrémité de la deuxième portion médiane que de sa première extrémité. Ceci permet de diminuer encore davantage la quantité de gaz piégée entre la vanne et l'extrémité de la troisième portion distale.

Selon un mode de réalisation, la deuxième portion médiane s'étend le long de la deuxième partie médiane du bras articulé.

Selon un mode de réalisation, la deuxième portion médiane présente une extrémité coudée orientée vers le bas et raccordée à la première portion proximale. Selon un mode de réalisation, la deuxième portion médiane présente une extrémité coudée orientée vers le bas et raccordée à la troisième portion distale. Ceci permet de limiter les contraintes s'exerçant sur la première portion proximale et la troisième portion distale.

Selon un mode de réalisation, l'une des extrémités de la deuxième portion médiane est alignée ou sensiblement alignée avec le deuxième axe d'articulation. Selon un mode de réalisation, l'une des extrémités de la deuxième portion médiane est alignée ou sensiblement alignée avec le troisième axe d'articulation. Selon un mode de réalisation, les deux extrémités de la deuxième portion médiane sont respectivement alignées avec le deuxième axe d'articulation et le troisième axe d'articulation. Ceci permet de limiter la longueur de la première portion proximale et de la troisième portion distale de la ligne de transfert.

Selon un mode de réalisation, la deuxième portion médiane est déportée latéralement par rapport à la deuxième partie médiane du bras articulé. Ceci est avantageux pour permettre l'intégration de la vanne lorsque celle-ci présente une hauteur importante.

Selon un mode de réalisation, la deuxième portion médiane est fixée à la deuxième partie médiane du bras articulé au moyen d'organes de support qui sont répartis le long de la deuxième partie médiane.

Selon un mode de réalisation, les organes de support comportent des traverses fixées à la deuxième partie médiane et un collier de serrage fixé auxdites traverses et au travers duquel passe la deuxième portion médiane.

Selon un mode de réalisation, les organes de supports comportent en outre un manchon isolant interposé radialement entre le collier de serrage et la deuxième partie médiane.

Selon un mode de réalisation, la première portion proximale repose sur un support recouvert d'un revêtement anti-adhérent. Ceci permet notamment de limiter l'usure par frottement de la première portion proximale.

Selon un mode de réalisation, le revêtement anti-adhérent du support est du polytétrafluoroéthylène.

Selon un mode de réalisation, la première partie proximale du bras articulé comporte une jupe cylindrique de protection comportant un revêtement anti-adhérent. Ceci permet également de limiter l'usure par frottement de la première partie proximale.

Selon un mode de réalisation, le revêtement anti-adhérent de la jupe cylindrique de protection est du polytétrafluoroéthylène.

Selon un mode de réalisation, la troisième portion distale est suspendue sur la troisième partie distale du bras articulé au moyen d'un dispositif de levage, le dispositif de levage comportant un tambour qui est fixé sur la troisième partie distale du bras et qui est associé avec une moteur et un câble qui est d'une part enroulé autour dudit tambour et d'autre part fixé à la troisième portion distale.

Selon un mode de réalisation, le dispositif de levage comporte une poulie disposée à une extrémité de la troisième partie distale et guidant ledit câble.

Selon un mode de réalisation, le tambour et le moteur associé sont positionnées plus proches du troisième axe que de la poulie.

Selon un mode de réalisation, le câble est fixé à la troisième portion distale au moyen d'un palonnier équilibreur de charge.

Selon un mode de réalisation, la troisième portion distale est équipée d'un dispositif de raccordement à déconnexion d'urgence.

Selon un mode de réalisation, le dispositif de raccordement à déconnexion d'urgence est accroché au palonnier équilibreur de charge.

Selon un mode de réalisation, le dispositif de raccordement à déconnexion d'urgence est disposé à la jonction de la troisième portion distale avec la deuxième portion médiane.

Selon un mode de réalisation, le système de transfert comporte au moins deux lignes de transfert, les premières portions proximales de l'une et l'autre des deux lignes de transfert étant respectivement disposées latéralement de part et d'autre de la première partie proximale du bras articulé et les deuxièmes portions médianes de l'une et l'autre des deux lignes de transfert étant respectivement disposées latéralement de part et d'autre de la deuxième partie médiane du bras articulé.

Selon un mode de réalisation le système de transfert comporte trois lignes de transfert, les premières portions proximales de deux des trois lignes de transfert, d'une part, et la troisième partie proximale de l'autre des trois lignes de transfert, d'autre part étant respectivement disposées de part et d'autre de la première partie proximale du bras articulé, les deuxièmes portions médianes de deux des trois lignes de transfert, d'une part, et la deuxième portion médiane de l'autre des trois lignes de transfert, d'autre part, étant respectivement disposées latéralement de part et d'autre de la deuxième partie médiane du bras articulé.

Selon un mode de réalisation, la deuxième portion médiane comporte un tuyau à double paroi présentant un espace intermédiaire qui est garni d'un matériau isolant.

Selon un mode de réalisation, la première portion proximale et la troisième portion distale comportent chacun un tuyau composite ou un tuyau à double paroi ondulée qui comporte un espace intermédiaire garni d'un matériau isolant.

Selon un mode de réalisation, le système de transfert comporte un manchon de protection qui est fixé à une extrémité de la deuxième portion médiane qui est raccordée à la première portion proximale, le manchon de protection logeant une extrémité de la première portion proximale et présentant une surface interne évasée de manière à garantir un rayon de courbure minimal pour ladite extrémité de la première portion proximale.

Selon un mode de réalisation, le système de transfert comporte un manchon de protection qui est fixé à une extrémité de la deuxième portion médiane qui est raccordée à la troisième portion distale, le manchon de protection logeant une extrémité de la première portion proximale et présentant une surface interne évasée de manière à garantir un rayon de courbure minimal pour ladite extrémité de la troisième portion distale.

Selon un mode de réalisation, le système de transfert comporte au moins deux lignes de transfert et un dispositif de dérivation qui raccorde la portion médiane des deux lignes de transfert en amont de la vanne équipant chacune des portions médianes.

Selon un mode de réalisation, le système de transfert comporte un dispositif d'actionnement permettent le déploiement du bras articulé.

Selon un mode de réalisation, le dispositif d'actionnement comporte un moteur configuré pour faire pivoter la première partie proximale autour du premier axe.

Selon un mode de réalisation, le dispositif d'actionnement comporte un premier actionneur linéaire présentant une première extrémité montée articulée sur la première partie proximale et une deuxième extrémité montée articulée sur la deuxième partie médiane et un deuxième actionneur linéaire présentant une première extrémité montée articulée sur la deuxième partie médiane et une deuxième extrémité montée articulée sur la troisième partie distale.

Selon un mode de réalisation, l'invention fournit un navire équipé d'un système de transfert précité.

Selon un mode de réalisation, le bras articulé présente une position de repos et le bras articulé s'étend, dans ladite position de repos, parallèlement à la direction longitudinale du navire.

### Brève description des figures

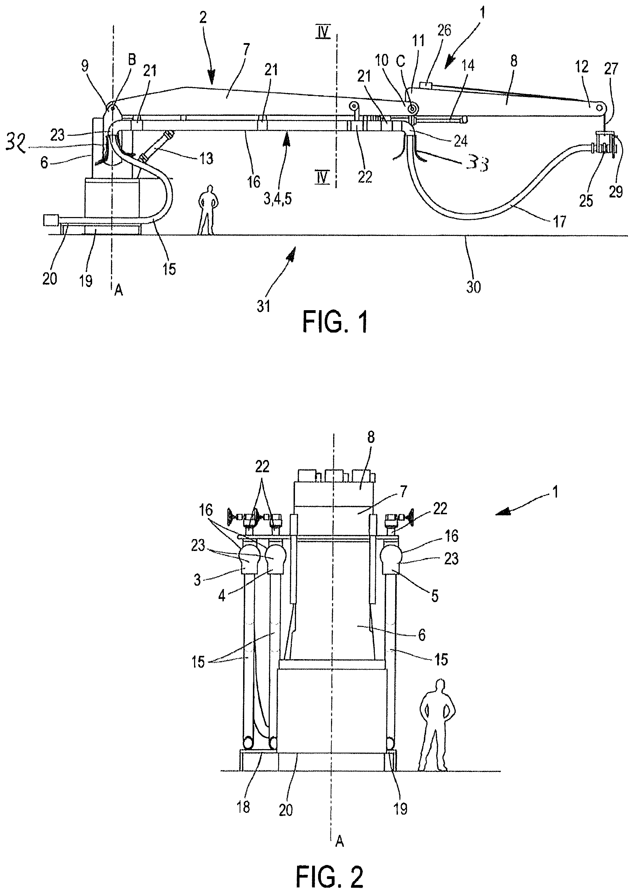

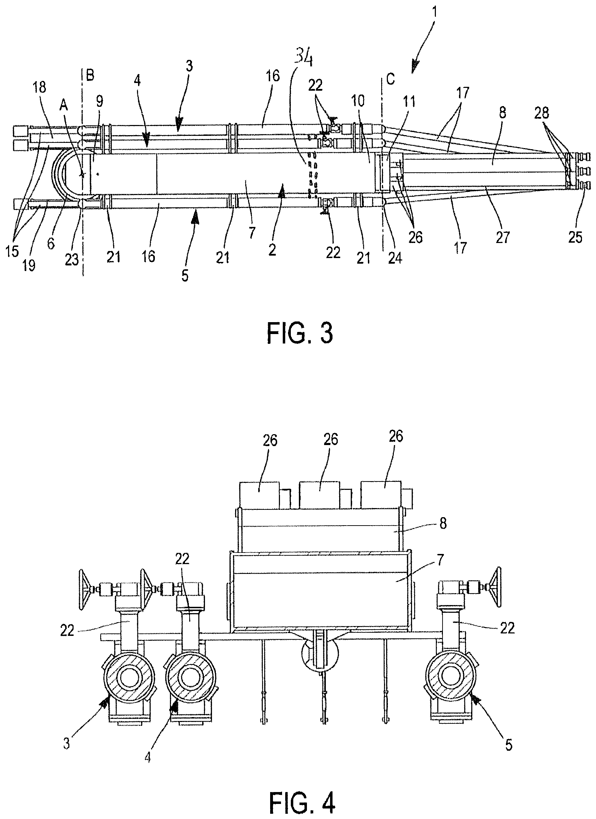

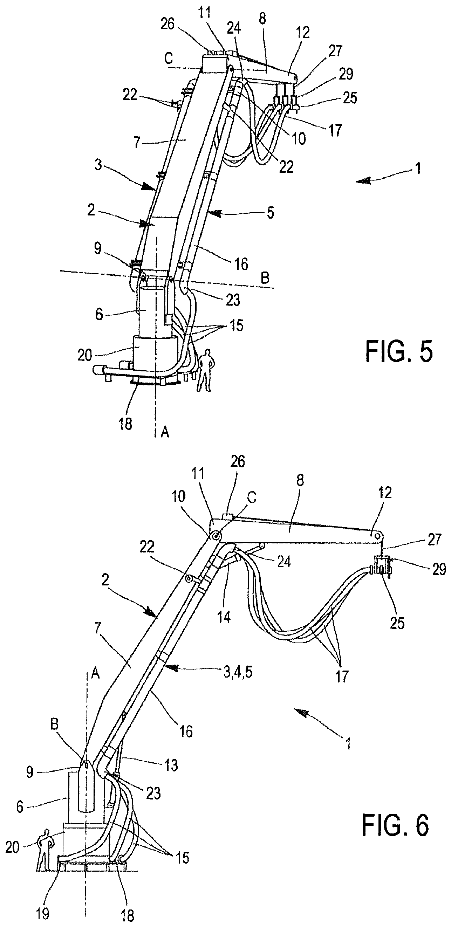

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
- **La** **figure 1** est une vue latérale d'un système de transfert d'un gaz liquéfié, selon un mode de réalisation, dans une position de repos.
- **La** **figure 2** est une vue arrière du système de transfert de gaz liquéfié de la figure 1.
- **La** **figure 3** est une vue de dessus du système de transfert de gaz liquéfié de la figure 1.
- **La** **figure 4** est une vue en coupe selon le plan IV-IV de la figure 1.
- **Les** **figures 5 et 6** illustrent le système de transfert dans une position déployée d'utilisation.

### Description détaillée de modes de réalisation

On décrira ci-dessous un système de transfert 1 permettant de transférer du gaz liquéfié, tel que du gaz naturel liquéfié (GNL), entre deux installations distantes, tel qu'un navire fournisseur et un navire client. Le navire fournisseur est par exemple un navire souteur chargé de ravitailler en GNL d'autres navires, et le navire client, un navire propulsé au GNL.

En références aux figures 1 à 6, on observe que le système de transfert 1 comporte un bras articulé 2 destiné à être monté articulé sur le pont 30 du navire fournisseur 31 et une pluralité de lignes de transfert 3, 4, 5.

Dans le mode de réalisation représenté, le système de transfert 1 comporte trois lignes de transfert 3, 4, 5. Une première et une deuxième lignes de transfert 3, 4, 5 sont destinées à être raccordées, d'une part, à une cuve de stockage du gaz naturel liquéfié, non représentée, du navire fournisseur, et, d'autre part à un manifold de réception du navire client, non représenté, et visent à transférer du gaz naturel liquéfié du navire fournisseur 31 vers le navire client. La troisième ligne de transfert 5 est également destinée à être raccordée à un manifold de réception du navire client mais vise à extraire du gaz naturel à l'état gazeux d'une cuve du navire client vers le navire fournisseur afin d'équilibrer les pressions dans les ciels gazeux des cuves des deux navires. Selon un mode de réalisation, la troisième ligne de transfert 5 est raccordée à une installation de re-liquéfaction du gaz, embarquée sur le navire fournisseur.

Afin d'engendrer la pression nécessaire au transfert du gaz naturel liquéfié, on met avantageusement en oeuvre des pompes, non représentées, embarquées sur le navire fournisseur et/ou des pompes embarquées sur le navire client.

Le bras articulé 2 comporte trois parties montées articulées les unes par rapport aux autres, à savoir une première partie proximale 6, une deuxième partie médiane 7 et une troisième partie distale 8. La première partie proximale 6 est montée pivotante autour d'un axe vertical A sur le pont du navire fournisseur, la deuxième partie médiane 7 est montée pivotante autour d'un axe horizontal B sur la première partie proximale 6 et la troisième partie distale 8 est montée pivotante autour d'un axe horizontal C sur la deuxième partie médiane 7.

Dans le mode de réalisation représenté, la première partie proximale 6 est une tourelle cylindrique qui est montée pivotante autour de l'axe vertical A et peut pivoter dans un sens ou dans l'autre depuis la position de repos, illustré sur les figures 1 et 2. Dans un mode de réalisation, en position de repos, le bras articulé s'étend dans un plan longitudinal qui est orienté parallèlement à la direction longitudinale du navire fournisseur. La tourelle cylindrique est par exemple apte à pivoter de 90° dans chacun des deux sens de pivotement par rapport à la position de repos illustrée sur les figures 1 et 2. Ainsi, le système de transfert 1 est apte à assurer le transfert de gaz liquéfié vers le navire client que celui-ci soit disposé d'un côté ou de l'autre du navire fournisseur 31.

La deuxième partie médiane 7 et la troisième partie distale 8 présentent chacune une forme de poutre. La deuxième partie médiane 7 est articulée, à son extrémité arrière 9, sur la première partie proximale 6 et à son extrémité avant 10, sur l'extrémité arrière 11 de la troisième partie distale 8.

Par ailleurs, afin de permettre le déploiement du bras articulé 2, celui-ci est équipé d'un dispositif d'actionnement. Le dispositif d'actionnement comporte un moteur, non illustré, permettant de faire pivoter la première partie proximale 6. Le dispositif d'actionnement comporte, en outre, deux actionneurs linéaires 13, 14, visibles sur les figures 1 et 6, tels que des vérins hydrauliques ou pneumatiques. Le premier actionneur linéaire 13 présente une première extrémité montée articulée sur la première partie proximale 6 et une deuxième extrémité montée articulée sur la deuxième partie médiane 7 et permet ainsi de commander la rotation de la deuxième partie médiane 7 par rapport à la première partie proximale 6. Le deuxième actionneur linéaire 14 présente une première extrémité montée articulée sur la deuxième partie médiane 7 et une deuxième extrémité montée articulée sur la troisième partie distale 8 et permet ainsi de commander la rotation de la troisième partie distale 8 par rapport à la deuxième partie médiane 7.

Comme représentée sur la figure 1, lorsque le bras articulé 2 est dans sa position de repos, la deuxième partie médiane 7 et la troisième partie distale 8 s'étendent dans le prolongement l'une de l'autre, sensiblement horizontalement. Dans cette position de repos, le premier actionneur linéaire 13 est dans une position escamotée tandis que le deuxième actionneur linéaire 14 est dans une position déployée. Afin de déplacer le bras articulé 2 de sa position de repos, illustré sur la figure 1 vers une position déployée, telle que représentée sur les figures 5 et 6, le premier actionneur 14 est apte à se détendre de manière à faire pivoter la deuxième partie médiane 7 par rapport à la première partie proximale 6 selon un premier sens de rotation de sorte à relever l'extrémité avant 10 de la deuxième partie médiane 7. Par ailleurs, le deuxième actionneur 14 est apte à se rétracter de manière à faire pivoter la troisième partie distale 8 par rapport à la deuxième partie médiane 7 selon un deuxième sens de rotation opposé au premier sens de rotation.

Un tel bras articulé 2 en trois parties permet ainsi au système de transfert 1 de s'adapter à une grande variété de configurations différentes.

Par ailleurs, chacune des trois lignes de transfert 3, 4, 5 comporte successivement une première portion proximale 15, flexible, une deuxième portion médiane 16, rigide, qui est fixée à la deuxième partie médiane 7 du bras articulé 2 et une troisième portion distale 17, flexible.

Les portions flexibles, à savoir la première portion proximale 15 et la troisième portion distale 17 sont constituées de tuyaux cryogéniques, tels que des tuyaux composites ou des tuyaux à double paroi ondulée, par exemple en acier inoxydable, dont l'espace intermédiaire est garni d'un matériau isolant.

Les premières portions proximales 15 des lignes de transfert 3, 4, 5 étant flexibles, elles autorisent, d'une part, le mouvement de rotation de la première partie proximale 6 par rapport au pont 30 du navire fournisseur 31 autour de l'axe vertical A et, d'autre part, le mouvement de rotation de la deuxième partie médiane 7 du bras articulé 2 par rapport à la première partie proximale 6 autour de l'axe horizontal B.

Les premières portions proximales 15 des lignes de transfert 3, 4, 5 sont réparties de part et d'autre de la première partie proximale 6 du bras articulé 2. En particulier, comme représenté sur la figure 3, la première portion proximale 15 des première et deuxième lignes de transfert 3, 4, d'une part, et celle de la troisième ligne de transfert 5, d'autre part, sont disposées diamétralement de part et d'autre de la première partie proximale 6 du bras articulé 2.

Le système de transfert 1 comporte deux supports 18, 19, plans, qui sont respectivement agencés pour supporter la première portion proximale 15 des première et deuxième lignes de transfert 3, 4 et celle de la troisième ligne de transfert 5. De manière avantageuse, les supports 18, 19 sont recouverts d'un revêtement anti-adhérent, ce qui permet de réduire les frottements susceptibles de s'exercer entre lesdits supports 18, 19 et les première portions proximales 15 des lignes de transfert 3, 4, 5 lorsque le bras articulé 2 est déplacé, et notamment lorsque la première partie proximale 6 du bras articulé 2 pivote autour de son axe de pivotement vertical A. Ceci permet, d'une part, de limiter l'usure par frottement des premières portions proximales 15 et, d'autre part, de limiter les efforts nécessaires au pivotement de la première partie proximale 6 du bras articulé 2. Le revêtement anti-adhérent est par exemple du polytétrafluoroéthylène (PTFE).

Par ailleurs, de manière avantageuse, la première partie proximale 6 comporte, au moins dans une portion inférieure susceptible d'être mise en contact avec les premières portions proximales 6 lors du mouvement de la première partie proximale 6 autour de l'axe vertical A, une jupe cylindrique de protection 20. La jupe cylindrique de protection 20 comporte un revêtement anti-adhérent, tel que du polytétrafluoroéthylène (PTFE). Ceci permet de limiter les frottements susceptibles de s'exercer entre la première partie proximale 6 du bras articulé 2 et les premières portions proximales 15 des lignes de transfert 3, 4, 5.

De manière avantageuse, comme représenté sur la figure 1, afin de limiter les contraintes agissant sur les premières portions proximales 15 lorsque le bras articulé 2 est en position de repos, les premières portions proximales 15 sont, dans ladite position de repos, sensiblement disposées dans un même plan vertical que le deuxième portion médiane 16 de leur ligne de transfert 3, 4, 5 respectif.

La deuxième portion médiane 16 des lignes de transfert 3, 4, 5 est rigide et est constituée par un tuyau cryogénique, tels qu'un tuyau à double paroi, par exemple en acier inoxydable, dont l'espace intermédiaire est garni d'un matériau isolant.

Les deuxièmes portions médianes 16 s'étendent le long de la deuxième partie médiane 7 du bras articulé 2, parallèlement à la direction longitudinale de celle-ci. Les deuxièmes portions médianes 16 sont disposées d'un côté ou de l'autre de la deuxième partie médiane 7 du bras articulé 2. Ainsi, comme représenté sur la figure 3, la deuxième portion médiane 16 des première et deuxième lignes de transfert 3, 4, d'une part, et celle de la troisième ligne de transfert 5, d'autre part, sont disposées latéralement de part et d'autre de la deuxième partie médiane 7 du bras articulé 2.

Les deuxièmes portions médianes 16 sont fixées au bras articulé 2 au moyen d'organes de support 21 qui sont régulièrement répartis le long desdites deuxièmes portions médianes 16. Selon un mode de réalisation, les organes de support 21 comportent des traverses qui sont soudées à la deuxième partie médiane 7 du bras articulé 2 et un collier de serrage qui est fixé auxdites traverses et au travers duquel passe la deuxième portion médiane 16. Avantageusement, les organes de support 21 comportent également un manchon isolant interposé radialement entre le collier de serrage et la deuxième portion médiane 16.

Les deuxièmes portions médianes 16 sont également équipées de vannes 22 cryogéniques. Les vannes 22 sont avantageusement disposées à proximité de l'extrémité avant de la deuxième portion médiane 16, c'est-à-dire l'extrémité de la deuxième portion médiane 16 qui est raccordée à la troisième portion distale 17. Ceci permet de limiter la quantité de gaz liquéfié en aval desdites vannes 22 lorsque les lignes de transfert 3, 4, 5 sont déconnectées du manifold de réception du navire client. Aussi, de manière avantageuse, les vannes 22 sont disposées plus proche de l'extrémité avant 24 de la deuxième portion médiane 16 que de l'extrémité arrière 23.

Notons en outre que, comme représenté par exemple sur la figure 4, les vannes 22 présentent une hauteur importante. C'est la raison pour laquelle, afin de permettre une intégration aisée desdites vannes 16, les deuxièmes portions médianes 16 sont déportées latéralement par rapport à la deuxième partie médiane 7 du bras articulé 2.

Par ailleurs, les deux extrémités 23, 24 de chaque deuxième portion médiane 16 sont coudées, par exemple à 90°, et sont orientés vers le bas. Ceci permet d'éviter que le rayon de courbure des premières portions proximales 15 et des troisièmes portions distales 17 ne soient trop faibles au niveau de leur extrémité raccordée à la deuxième portion médiane 16. Ainsi, les contraintes susceptibles de s'exercer sur les premières portions proximales 15 et sur les troisièmes portions distales 17 sont limitées.

De manière avantageuse, l'extrémité arrière 23 de chaque deuxième portion médiane 16 est alignée ou sensiblement alignée avec l'axe d'articulation B de la deuxième partie médiane 7 par rapport à la première partie proximale 6 du bras articulé 2. De même, l'extrémité avant 24 de chaque deuxième portion médiane 16 est avantageusement alignée ou sensiblement alignée avec l'axe d'articulation C de la troisième partie distale 8 par rapport à la deuxième partie médiane 7 du bras articulé 2. Ceci permet de limiter la longueur de la première portion proximale 15 et de la troisième portion distale 8 des lignes de transfert 3, 4, 5et de limiter leur usure en fatigue.

En outre, selon un mode de réalisation avantageux, comme représenté de manière schématique sur la figure 1, le système de transfert 1 comporte des manchons de protection 32, 33 qui sont fixés à l'extrémité arrière 23 et à l'extrémité avant 24 de chaque portion médiane 16. L'extrémité avant de la première portion proximale 15 est logée dans le manchon de protection 32 et l'extrémité arrière de la troisième portion distale 17 est logée dans le manchon de protection 33. Les manchons de protection 23, 24 présentent une surface interne arquée qui s'évase vers le bas et présente ainsi une forme de tulipe. Le rayon de courbure de la surface interne arquée est supérieur au rayon de courbure minimale admissible de la première portion proximale 15 et de la troisième portion distale 17. Les manchons de protection 32, 33 permettent ainsi de protéger encore davantage la première portion proximale 15 et la troisième portion distale 17.

Par ailleurs, la troisième portion distale 8 de chaque ligne de transfert 3, 4, 5 comporte, au niveau de son extrémité libre, un dispositif de raccordement 25 destiné à être raccordé à un manifold du navire client, lors d'une opération de transfert.

Selon un mode de réalisation, le dispositif de raccordement 25 est un dispositif de raccordement à déconnexion d'urgence. Un tel dispositif de raccordement à déconnexion d'urgence est couramment désigné par le terme ERC pour « Emergency release coupling » en langue anglaise. Un dispositif de raccordement à déconnexion d'urgence comporte un élément amont et un élément aval qui sont raccordés l'un à l'autre, de manière étanche, dans une position d'utilisation et qui sont aptes à se séparer l'un de l'autre dans une situation d'urgence. De manière avantageuse, chacun des éléments amont et aval est équipé d'un clapet qui permet d'empêcher le passage du fluide au travers dudit élément amont ou aval lorsque les éléments amont et aval sont déconnectés l'un de l'autre. Selon un mode de réalisation, la déconnexion du dispositif de raccordement à déconnexion d'urgence est pilotée au moyen d'un circuit hydraulique ou pneumatique susceptible d'être commandé à distance. Selon un autre mode de réalisation, les éléments avant et amont sont solidarisés l'un à l'autre au moyen d'un organe de fixation conçu pour se rompre lorsqu'un effort de séparation supérieur à un seuil déterminé est exercé sur le dispositif de raccordement à déconnexion d'urgence.

Selon un autre mode de réalisation non représenté, le système de transfert 1 comporte en plus du dispositif de raccordement 25 disposé, à l'extrémité libre de chacune des troisièmes portions distales 17, un dispositif de raccordement à déconnexion d'urgence qui est positionné à l'extrémité arrière de la troisième portion distale 17, c'est-à-dire à l'extrémité qui est raccordée à la deuxième portion médiane 16.

Par ailleurs, la troisième portion distale 17 de chaque ligne de transfert 3, 4, 5 est suspendue à l'extrémité avant 12 de la troisième partie distale 8 du bras articulé 2. Pour ce faire, chacun des dispositifs de raccordement 25 est fixé à un dispositif de levage. Chaque dispositif de levage comporte un tambour 26 qui est fixé sur la troisième partie distale 8 du bras articulé 2 et qui coopère avec un moteur permettant d'entraîner en rotation ledit tambour 26, et un câble 27 qui est, d'une part, enroulé autour dudit tambour 26, et, d'autre part, fixé à l'un des dispositifs de raccordement 25. Dans le mode de réalisation représenté, chaque câble 27 coopère avec une poulie 28, représentée sur la figure 3, disposée à l'extrémité avant 12 de la troisième partie distale 8 de manière à ce que la troisième portion distale 17 des lignes de transfert 3, 4, 5 soit suspendue à l'extrémité avant 12 de la troisième partie distale 8 bien que la tambour 26 du dispositif de levage soit disposé à distance de ladite extrémité avant 12. Aussi, de manière avantageuse, les tambours 26 et moteurs associés sont disposés à proximité de l'extrémité arrière 11 de la troisième partie distale 8, ce qui permet de limiter le moment généré par le poids des tambours 26 et moteurs et permet ainsi de limiter les efforts s'exerçant sur le deuxième actionneur linéaire 14.

Dans le mode de réalisation avantageux représenté, le câble 27 de chaque dispositif de levage est relié au dispositif de raccordement 25 respectif au moyen d'un palonnier équilibreur de charge 29, représenté sur les figures 1, 5 et 6, qui permet de maintenir le dispositif de raccordement 25 sensiblement à l'horizontal quelle que soit l'inclinaison du bras articulé 2.

Dans un mode de réalisation avantageux, le système de transfert 1 comporte un dispositif de dérivation 34 , représenté en traits pointillés sur la figure 3, qui permet de raccorder la portion médiane 16 des première, deuxième et troisième lignes de transfert 3, 4, 5 en amont des vannes 22. Un tel dispositif de dérivation 34 permet de faciliter la mise en froid des première et deuxième lignes de transfert 3, 4. Une telle mise en froid vise à placer les première et deuxième lignes de transfert 3, 4 dans des conditions de température et de pression adaptées au transfert de gaz naturel liquéfié. Afin de réaliser cette mise en froid, du gaz liquéfié est par exemple conduit au travers de premières et deuxième lignes de transfert 3, 4 puis passe au travers du dispositif de dérivation 34 avant de revenir vers la cuve du navire fournisseur 30, par exemple via la troisième ligne de transfert 5.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Système de transfert (1) du gaz liquéfié entre une première et une deuxième installations, ledit système de transfert (1) comportant :
- un bras articulé (2) comportant une première partie proximale (6) destinée à être montée mobile en rotation sur la première installation autour d'un premier axe (A) vertical, une deuxième partie médiane (7) qui est montée pivotante sur la première partie proximale (6) autour d'un deuxième axe (B) et une troisième partie distale (8) qui est montée pivotante sur la deuxième partie médiane (7) autour d'un troisième axe (C) ; et
- au moins une ligne de transfert (3, 4, 5), destinée à transférer du gaz liquéfié entre la première et la deuxième installation, et comportant une première portion proximale (15) flexible destinée à être raccordée à une cuve de stockage de gaz liquéfié de la première installation ; une deuxième portion médiane (16) rigide qui est fixée à la deuxième partie médiane (7) du bras articulé (2) et une troisième portion distale (17) qui est suspendue à la troisième partie distale (8) du bras articulé (2) et qui présente une extrémité destinée à être raccordée à un manifold de la deuxième installation, **caractérisé en ce que** la deuxième portion médiane (16) est équipée d'une vanne (22).

2. Système de transfert (1) selon la revendication 1, dans lequel la deuxième portion médiane (16) s'étend le long de la deuxième partie médiane (7) du bras articulé (2) et présente deux extrémités (23, 24) coudées orientées vers le bas et raccordées respectivement à la première portion proximale (15) et à la troisième portion distale (17).

3. Système de transfert (1) selon la revendication 1 ou 2, dans lequel les deux extrémités de la deuxième portion médiane (16) sont respectivement alignées avec le deuxième axe d'articulation (B) et le troisième axe d'articulation (C).

4. Système de transfert (1) selon l'une quelconque des revendications 1 à 3, dans lequel la deuxième portion médiane (16) est déportée latéralement par rapport à la deuxième partie médiane (7) du bras articulé (2).

5. Système de transfert (1) selon l'une quelconque des revendications 1 à 4, dans lequel la deuxième portion médiane (16) est fixée à la deuxième partie médiane (7) du bras articulé (2) au moyen d'organes de support (21) qui sont répartis le long de la deuxième partie médiane (7), les organes de support (21) comportant des traverses fixées à la deuxième partie médiane (7) et un collier de serrage fixé auxdites traverses et au travers duquel passe la deuxième portion médiane (16).

6. Système de transfert (1) selon l'une quelconque des revendications 1 à 5, dans lequel la première portion proximale (15) repose sur un support (18, 19) recouvert d'un revêtement anti-adhérent.

7. Système de transfert (1) selon l'une quelconque des revendications 1 à 6, dans lequel la première partie proximale (6) du bras articulé (2) comporte une jupe cylindrique de protection (20) comportant un revêtement anti-adhérent.

8. Système de transfert (1) selon l'une quelconque des revendications 1 à 7, dans lequel la troisième portion distale (17) est suspendue sur la troisième partie distale (8) du bras articulé (2) au moyen d'un dispositif de levage, le dispositif de levage comportant un tambour (26) qui est fixé sur la troisième partie distale (8) du bras articulé (2) et qui est associé avec une moteur et un câble (27) qui est d'une part enroulé autour dudit tambour (26) et d'autre part fixé à la troisième portion distale (17).

9. Système de transfert (1) selon la revendication 8, dans lequel le câble (27) est fixé à la troisième portion distale (17) au moyen d'un palonnier équilibreur de charge (29).

10. Système de transfert (1) selon l'une quelconque des revendications 1 à 9, dans lequel la troisième portion distale (17) est équipée d'un dispositif de raccordement à déconnexion d'urgence (25).

11. Système de transfert (1) selon les revendications 9 et 10 prises en combinaison, dans lequel le dispositif de raccordement à déconnexion d'urgence (25) est accroché au palonnier équilibreur de charge (29).

12. Système de transfert (1) selon la revendication 10, dans lequel le dispositif de raccordement à déconnexion d'urgence est disposé à la jonction de la troisième portion distale (17) avec la deuxième portion médiane (16).

13. Système de transfert (1) selon l'une quelconque des revendications 1 à 12, comportant au moins deux lignes de transfert (3, 4, 5), les premières portions proximales (15) de l'une et l'autre des deux lignes de transfert (3, 4, 5) étant respectivement disposées latéralement de part et d'autre de la première partie proximale (6) du bras articulé (2) et les deuxièmes portions médianes (16) de l'une et l'autre des deux lignes de transfert (3, 4, 5) étant respectivement disposées latéralement de part et d'autre de la deuxième partie médiane (7) du bras articulé (2).

14. Système de transfert (1) selon l'une quelconque des revendications 1 à 13, dans lequel la deuxième portion médiane (16) comporte un tuyau à double paroi présentant un espace intermédiaire qui est garni d'un matériau isolant.

15. Système de transfert (1) selon l'une quelconque des revendications 1 à 14, dans lequel la première portion proximale (15) et la troisième portion distale (17) comportent chacun un tuyau composite ou un tuyau à double paroi ondulée qui comporte un espace intermédiaire garni d'un matériau isolant.

16. Système de transfert (1) selon l'une quelconque des revendications 1 à 15, comportant un manchon de protection (32) qui est fixé à une extrémité (23) de la deuxième portion médiane (16) qui est raccordée à la première portion proximale (15), le manchon de protection (32) logeant une extrémité de la première portion proximale (15) et présentant une surface interne évasée de manière à garantir un rayon de courbure minimal pour ladite extrémité de la première portion proximale (15).

17. Système de transfert (1) selon l'une quelconque des revendications 1 à 16, comportant un manchon de protection (32) qui est fixé à une extrémité (24) de la deuxième portion médiane (16) qui est raccordée à la troisième portion distale (17), le manchon de protection (32) logeant une extrémité de la première portion proximale (15) et présentant une surface interne évasée de manière à garantir un rayon de courbure minimal pour ladite extrémité de la troisième portion distale (17).

18. Système de transfert (1) selon l'une quelconque des revendications 1 à 17, comportant au moins deux lignes de transfert (3, 4, 5) et un dispositif de dérivation (34) qui raccorde la portion médiane (16) des deux lignes de transfert (3, 4, 5) en amont de la vanne (22) équipant chacune des portions médianes (16).

19. Navire (30) équipé d'un système de transfert selon l'une quelconque des revendications 1 à 18.

## Patentansprüche

1. Transfersystem (1) für Flüssiggas zwischen einer ersten und einer zweiten Anlage, wobei das Transfersystem (1) umfasst:
- einen Gelenkarm (2), bestehend aus einem ersten proximalen Bereich (6), der dazu bestimmt ist, an der ersten Anlage um eine erste vertikale Achse (A) drehbar montiert zu werden, einem zweiten mittleren Bereich (7), der um eine zweite Achse (B) schwenkbar am ersten proximalen Bereich (6) montiert ist, und einem dritten distalen Bereich (8), der um eine dritte Achse (C) schwenkbar am zweiten mittleren Bereich (7) montiert ist; und
- mindestens eine Transferleitung (3, 4, 5), die dazu bestimmt ist, Flüssiggas zwischen der ersten und der zweiten Anlage zu transportieren, und einen ersten flexiblen proximalen Abschnitt (15) umfasst, der dazu bestimmt ist, mit einem Flüssiggasspeichertank der ersten Anlage verbunden zu werden; einen zweiten starren mittleren Abschnitt (16), der am zweiten Mittelbereich (7) des Gelenkarms (2) befestigt ist, und einen dritten distalen Abschnitt (17), der am dritten distalen Bereich (8) des Gelenkarms (2) aufgehängt ist und der ein Ende aufweist, welches dazu bestimmt ist, mit einem Verteiler der zweiten Anlage verbunden zu werden, **dadurch gekennzeichnet, dass** der zweite mittleren Abschnitt (16) mit einem Ventil (22) ausgestattet ist.

2. Transfersystem (1) gemäß Anspruch 1, wobei sich der zweite mittlere Abschnitt (16) entlang des zweiten mittleren Bereichs (7) des Gelenkarms (2) erstreckt und zwei nach unten abgewinkelte Enden (23, 24) aufweist, die jeweils mit dem ersten proximalen Abschnitt (15) und dem dritten distalen Abschnitt (17) verbunden sind.

3. Transfersystem (1) gemäß Anspruch 1 oder 2, wobei die beiden Enden des zweiten mittleren Abschnitts (16) jeweils auf die zweite Gelenkachse (B) und die dritte Gelenkachse (C) ausgerichtet sind.

4. Transfersystem (1) gemäß einem der Ansprüche 1 bis 3, wobei der zweite mittlere Abschnitt (16) gegenüber dem zweiten mittleren Bereich (7) des Gelenkarms (2) seitlich versetzt ist.

5. Transfersystem (1) gemäß einem der Ansprüche 1 bis 4, wobei der zweite mittlere Abschnitt (16) am zweiten mittleren Bereich (7) des Gelenkarms (2) mittels Stützelementen (21) befestigt ist, die entlang des zweiten mittleren Bereiches (7) verteilt sind, wobei die Stützelemente (21) am zweiten mittleren Bereich (7) befestigte Querträger und eine an den Querträgern befestigte Klemme umfassen und durch die der zweite mittlere Abschnitt (16) hindurchgeführt ist.

6. Transfersystem (1) gemäß einem der Ansprüche 1 bis 5, wobei der erste proximale Abschnitt (15) auf einem Träger (18, 19), der mit einer Antihaftbeschichtung versehen ist, ruht.

7. Transfersystem (1) gemäß einem der Ansprüche 1 bis 6, wobei der erste proximale Bereich (6) des Gelenkarms (2) einen zylindrischen Schutzmantel (20), welcher eine Antihaftbeschichtung umfasst, umfasst.

8. Transfersystem (1) gemäß einem der Ansprüche 1 bis 7, wobei der dritte distale Abschnitt (17) mittels einer Hebevorrichtung am dritten distalen Bereich (8) des Gelenkarms (2) aufgehängt ist, wobei die Hebevorrichtung eine Trommel (26) umfasst, die am dritten distalen Bereich (8) des Gelenkarms (2) befestigt ist und die mit einem Motor und einem Kabel (27), welches einerseits um die Trommel (26) gewickelt und andererseits am dritten distalen Abschnitt befestigt ist (17), verbunden ist.

9. Transfersystem (1) gemäß Anspruch 8, wobei das Kabel (27) mittels eines Lastausgleichsbalkens (29) am dritten distalen Abschnitt (17) befestigt ist.

10. Transfersystem (1) gemäß einem der Ansprüche 1 bis 9, wobei der dritte distale Abschnitt (17) mit einer Vorrichtung zur Verbindung mit Notabschaltung (25) ausgestattet ist.

11. Transfersystem (1) gemäß den Ansprüchen 9 und 10 in Kombination, wobei die Vorrichtung zur Verbindung mit Notabschaltung (25) am Lastausgleichsbalken (29) eingehängt ist.

12. Transfersystem (1) gemäß Anspruch 10, wobei die Vorrichtung zur Verbindung mit Notabschaltung an der Verbindungsstelle des dritten distalen Abschnitts (17) mit dem zweiten mittleren Abschnitt (16) angeordnet ist.

13. Transfersystem (1) gemäß einem der Ansprüche 1 bis 12, umfassend mindestens zwei Transferleitungen (3, 4, 5), wobei die ersten proximalen Abschnitte (15) der einen und der anderen der beiden Transferleitungen (3, 4, 5) jeweils seitlich zu beiden Seiten des ersten proximalen Bereichs (6) des Gelenkarms (2) angeordnet sind und die zweiten mittleren Abschnitte (16) der einen und der anderen der beiden Transferleitungen (3, 4, 5) jeweils seitlich zu beiden Seiten des zweiten mittleren Bereiches (7) des Gelenkarms (2) angeordnet sind.

14. Transfersystem (1) gemäß einem der Ansprüche 1 bis 13, wobei der zweite mittlere Abschnitt (16) ein doppelwandiges Rohr mit einem Zwischenraum, der mit einem Isoliermaterial ausgekleidet ist, umfasst.

15. Transfersystem (1) gemäß einem der Ansprüche 1 bis 14, wobei der erste proximale Abschnitt (15) und der dritte distale Abschnitt (17) jeweils ein Verbundrohr oder ein gewelltes doppelwandiges Rohr, das einen mit einem Isoliermaterial ausgekleideten Zwischenraum aufweist, umfassen.

16. Transfersystem (1) gemäß einem der Ansprüche 1 bis 15, umfassend eine Schutzhülse (32), die an einem Ende (23) des zweiten mittleren Abschnitts (16), der mit dem ersten proximalen Abschnitt (15) verbunden ist, befestigt ist, wobei die Schutzhülse (32) ein Ende des ersten proximalen Abschnitts (15) aufnimmt und eine aufgeweitete Innenfläche aufweist, um einen minimalen Krümmungsradius für das Ende des ersten proximalen Abschnitts (15) zu gewährleisten.

17. Transfersystem (1) gemäß einem der Ansprüche 1 bis 16, umfassend eine Schutzhülse (32), die an einem Ende (24) des zweiten mittleren Abschnitts (16), der mit dem dritten distalen Abschnitt (17) verbunden ist, befestigt ist, wobei die Schutzhülse (32) ein Ende des ersten proximalen Abschnitts (15) aufnimmt und eine aufgeweitete Innenfläche aufweist, um einen minimalen Krümmungsradius für das Ende des dritten distalen Abschnitts (17) zu gewährleisten.

18. Transfersystem (1) gemäß einem der Ansprüche 1 bis 17, umfassend mindestens zwei Transferleitungen (3, 4, 5) und eine Vorrichtung zur Ableitung (34), die den mittleren Abschnitt (16) der beiden Transferleitungen (3, 4, 5) stromaufwärts des Ventils (22), mit dem jeder der mittleren Abschnitte (16) ausgestattet ist, verbindet.

19. Schiff (30), ausgestattet mit einem Transfersystem gemäß einem der Ansprüche 1 bis 18.

## Claims

1. A system (1) for transferring liquefied gas between a first facility and a second facility, said transfer system (1) including:
- an articulated arm (2) including a first proximal part (6) suitable for being mounted so that it can rotate on the first facility about a first vertical axis (A), a second median part (7) that is mounted pivoting on the first proximal part (6) about a second axis (B) and a third distal part (8) that is mounted pivoting on the second median part (7) about a third axis (C); and
- at least one transfer line (3, 4, 5), suitable for transferring liquefied gas between the first facility and the second facility, and including a flexible first proximal portion (15) suitable for being connected to a liquefied gas storage tank of the first facility; a rigid second median portion (16) that is fastened to the second median part (7) of the articulated arm (2) and a third distal portion (17) that is suspended on the third distal part (8) of the articulated arm (2) and has an end suitable for being connected to a manifold of the second facility, **characterized in that** the second median portion (16) is provided with a valve (22).

2. The transfer system (1) as claimed in claim 1, in which the second median portion (16) extends along the second median part (7) of the articulated arm (2) and has two bent ends (23, 24) oriented downwards and connected respectively to the first proximal portion (15) and the third distal portion (17).

3. The transfer system (1) as claimed in claim 1 or 2, in which the two ends of the second median portion (16) are respectively aligned with the second axis of articulation (B) and the third axis of articulation (C).

4. The transfer system (1) as claimed in any one of claims 1 to 3, in which the second median portion (16) is laterally offset relative to the second median part (7) of the articulated arm (2).

5. The transfer system (1) as claimed in any one of claims 1 to 4, in which the second median portion (16) is fastened to the second median part (7) of the articulated arm (2) by means of support members (21) that are distributed along the second median part (7), the support members (21) including cross members fastened to the second median part (7) and a clamping collar fastened to said cross members and through which the second median portion (16) passes.

6. The transfer system (1) as claimed in any one of claims 1 to 5, in which the first proximal portion (15) rests on a support (18, 19) covered with a non-stick coating.

7. The transfer system (1) as claimed in any one of claims 1 to 6, in which the first proximal part (6) of the articulated arm (2) includes a protective cylindrical skirt (20) including a non-stick coating.

8. The transfer system (1) as claimed in any one of claims 1 to 7, in which the third distal portion (17) is suspended on the third distal part (8) of the articulated arm (2) by means of a lifting device, the lifting device including a drum (26) that is fastened to the third distal part (8) of the articulated arm (2) and is associated with a motor and a cable (27) that is wound around said drum (26) and fastened to the third distal portion (17).

9. The transfer system (1) as claimed in claim 8, in which the cable (27) is fastened to the third distal portion (17) by means of a load distributing spreader (29).

10. The transfer system (1) as claimed in any one of claims 1 to 9, in which the third distal portion (17) is provided with an emergency release coupling (25).

11. The transfer system (1) as claimed in claims 9 and 10 in combination, in which the emergency release coupling (25) is hung on the load balancing spreader (29).

12. The transfer system (1) as claimed in claim 10, in which the emergency release coupling is arranged at the junction between the third distal portion (17) and the second median portion (16).

13. The transfer system (1) as claimed in any one of claims 1 to 12, including at least two transfer lines (3, 4, 5), the first proximal portions (15) of each of the two transfer lines (3, 4, 5) being respectively arranged laterally on either side of the first proximal part (6) of the articulated arm (2) and the second median portions (16) of each of the two transfer lines (3, 4, 5) being respectively arranged laterally on either side of the second median part (7) of the articulated arm (2).

14. The transfer system (1) as claimed in any one of claims 1 to 13, in which the second median portion (16) includes a double-walled hose having an intermediate space that is lined with an insulating material.

15. The transfer system (1) as claimed in any one of claims 1 to 14, in which the first proximal portion (15) and the third distal portion (17) each include a composite hose or a corrugated double-walled hose that includes an intermediate space lined with an insulating material.

16. The transfer system (1) as claimed in any one of claims 1 to 15, including a protective sleeve (32) that is fastened to one end (23) of the second median portion (16), which is connected to the first proximal portion (15), the protective sleeve (32) accommodating one end of the first proximal portion (15) and having a flared inner surface so that it ensures a minimum radius of curvature for said end of the first proximal portion (15).

17. The transfer system (1) as claimed in any one of claims 1 to 16, including a protective sleeve (33) that is fastened to one end (24) of the second median portion (16), which is connected to the third distal portion (17), the protective sleeve (33) accommodating one end of the first proximal portion (15) and having a flared inner surface so that it ensures a minimum radius of curvature for said end of the third distal portion (17).

18. The transfer system (1) as claimed in any one of claims 1 to 17, including at least two transfer lines (3, 4, 5) and a bypass device (34) that connects the median portion (16) of the two transfer lines (3, 4, 5) upstream of the valve (22) provided on each of the median portions (16).

19. A vessel (30) provided with a transfer system as claimed in any one of claims 1 to 18.
